# EUROPÄISCHE PATENTSCHRIFT

(11) **EP 2 574 575 B1**
(45) Veröffentlichungstag und Bekanntmachung des Hinweises auf die Patenterteilung: **29.10.2014**
(21) Anmeldenummer: 12183320.6
(22) Anmeldetag: 06.09.2012
(51) Int. Cl.: B65G 45/12

(54) **Abstreifer für ein Förderband**
Scraper for a conveyor belt
Racleur pour une bande convoyeuse

(30) Priorität: 28.09.2011 AT 14002011
(43) Veröffentlichungstag der Anmeldung: 03.04.2013
(73) Patentinhaber: Hoessl GmbH, 4210 Gallneukirchen (AT)
(72) Erfinder: Hoessl, Peter, 4210 Gallneukirchen (AT)
(74) Vertreter: Hübscher, Helmut

(56) Entgegenhaltungen:
- EP-A2- 1 712 494
- DE-A1- 19 856 338
- GB-A- 2 364 985

## Beschreibung

Die Erfindung bezieht sich auf einen Abstreifer für ein Förderband mit einem quer zum Förderband verlaufenden Träger für eine biegeelastische Abstreifleiste vorzugsweise aus in Trägerlängsrichtung nebeneinandergereihten Leistenabschnitten, die auf radial vom Träger abstehende, sich in Trägerlängsrichtung erstreckende Befestigungsansätze aufgesteckt und auf den Befestigungsansätzen über in Rastaussparungen eingreifende Rastkörper gesichert sind.

Bei bekannten Abstreifern dieser Art (EP 0 153 527 B) bilden die Leistenabschnitte der biegeelastischen Abstreifleiste in Trägerlängsrichtung verlaufende Aufnahmenuten für die radial vom Träger abstehenden, mit gegenseitigem Abstand in Trägerlängsrichtung verlaufenden Befestigungsansätze, die in ihrer Längsmitte eine Rastaussparung für innerhalb der Aufnahmenut der Leistenabschnitte angeordnete Rastkörper bilden. Aufgrund der biegeelastischen Eigenschaften der Abstreifleiste greifen die Rastkörper federnd in die Rastaussparungen ein, wenn die Leistenabschnitte in radialer Richtung auf die Befestigungsansätze aufgesteckt werden. Nachteilig ist allerdings, dass die lediglich in Aufnahmenuten der Leistenabschnitte eingreifenden Befestigungsansätze bei hohen Belastungsanforderungen keine ausreichende Abstützung für die Leistenabschnitte bieten können, wenn diese Leistenabschnitte gute biegeelastische Eigenschaften aufweisen, die zur Anpassung des Abstreifers an den Verlauf des zu reinigenden Förderbandes erforderlich sind. Außerdem ergeben sich Schwierigkeiten, die Leistenabschnitte, die ja Verschleißteile darstellen, wieder von den Befestigungsansätzen zu lösen, weil im Allgemeinen der Zugang zu den Leistenabschnitten beschränkt ist und zur Überwindung der Rastverbindung zwischen den Leistenabschnitten und den Befestigungsansätzen des Trägers vergleichsweise große Kräfte erforderlich werden.

Der Erfindung liegt somit die Aufgabe zugrunde, einen Abstreifer der eingangs geschilderten Art für ein Förderband so auszugestalten, dass ein sicherer Halt der Leistenabschnitte auf den Befestigungsansätzen des Trägers gewährleistet werden kann, ohne eine Beeinträchtigung der Biegeelastizität der Abstreifleiste in Kauf nehmen zu müssen. Außerdem soll das Lösen der Leistenabschnitte von den Befestigungsansätzen des Trägers erleichtert werden.

Die Erfindung löst die gestellte Aufgabe dadurch, dass die Leistenabschnitte die Befestigungsansätze formschlüssig aufnehmende Taschen bilden, dass die Taschen zumindest auf einer Breitseite die Rastaussparungen für die auf den radialen Stirnseiten der Befestigungsansätze vorgesehenen Rastkörper aufweisen und dass die Leistenabschnitte auf der Seite der Rastkörper mit außerhalb der Befestigungsansätze tangential zum Träger und quer zu den Befestigungsansätzen verlaufenden, einen Durchtritt über dem Träger freigebenden Öffnungen für den Einsatz eines Hebelwerkzeugs versehen sind.

Da die Befestigungsansätze des Trägers formschlüssig in Taschen der Leistenabschnitte eingreifen, werden die Leistenabschnitte nicht nur quer zu den Befestigungsansätzen, sondern auch in Trägerlängsrichtung an den Befestigungsansätzen abgestützt, was einen guten Halt der Leistenabschnitte trotz einer vergleichsweise geringen Taschentiefe bedingt. Die beschränkte Taschentiefe der Leistenabschnitte ist wiederum Voraussetzung für eine gute Ausnützung der biegeelastischen Werkstoffeigenschaften der Leistenabschnitte, sodass den am Abstreifer für Förderbänder gestellten Anforderungen vorteilhaft entsprochen werden kann. Obwohl längere Abstreifleisten vorteilhaft aus mehreren in Trägerlängsrichtung nebeneinandergereihten Leistenabschnitten zusammengesetzt sind, ist dies nicht zwingend. Besteht die Abstreifleiste eines Abstreifers lediglich aus einem Abschnitt, so kann für diesen Leistenabschnitt selbstverständlich ebenfalls die Abstützung über einen formschlüssig in eine entsprechende Tasche eingreifenden Befestigungsansatz des Trägers genützt werden.

Die Verriegelung zwischen den Befestigungsansätzen und den Leistenabschnitten erfolgt über Rastkörper auf den radialen Stirnseiten der Befestigungsansätze, wobei die Rastaussparungen für die Rastkörper auf der Breitseite der Taschen der Leistenabschnitte vorgesehen sind, was die Abstützung der Leistenabschnitte auf den Befestigungsansätzen unterstützt, weil in diesem Fall die Rastkörper widerhakenartig ausgebildet werden können. Da die Leistenabschnitte auf der Seite der Rastkörper mit außerhalb der Befestigungsansätze tangential zum Träger verlaufenden Öffnungen versehen sind, die einen über den Träger hinweg freigebenden Durchtritt für den Einsatz eines Hebelwerkzeugs ermöglichen, sind auch die konstruktiven Voraussetzungen für ein einfaches Lösen der Leistenabschnitte von den Befestigungsansätzen des Trägers gegeben. Das Hebelwerkzeug, im einfachsten Fall ein Schraubenzieher, kann ja durch diese Öffnungen eingeführt und am Träger als Hebel abgestützt werden, über den der jeweilige Leistenabschnitt unter einer Überwindung des Rasteingriffs des Rastkörpers in die Rastaussparung vom Träger abgehoben und vom Befestigungsansatz abgezogen werden kann.

Obwohl für geringere Abstreiferbelastungen einseitige Verriegelungen der Leistenabschnitte gegenüber den Befestigungsansätzen möglich sind, ergeben sich vorteilhafte Verriegelungsbedingungen, wenn auf beiden Breitseiten der Tasche der Leistenabschnitte Rastaussparungen für entsprechende Rastkörper der Befestigungsansätze vorgesehen werden. Werden dabei die Rastaussparungen auf der Breitseite der Taschen als in Trägerlängsrichtung verlaufende Durchtrittsöffnungen ausgebildet, so können für die Herstellung der Leistenabschnitte aus einer Kunststoffschmelze einfache Formwerkzeuge eingesetzt werden. Die lediglich im Bereich der Rastkörper der Befestigungsansätze erforderlichen Durchtrittsöffnungen der Leistenabschnitte stellen die sichere Halterung der Leistenabschnitte auf den Befestigungsansätzen des Trägers nicht in Frage.

Sind die einen Durchtritt über dem Träger freigebenden Öffnungen der Leistenabschnitte als Nuten in der am Träger anliegenden Stützfläche der Leistenabschnitte ausgebildet, so wird nicht nur eine konstruktive Voraussetzung für eine Vereinfachung des Formwerkzeugs zur Herstellung dieser Leistenabschnitte, sondern ausreichend Platz zur Handhabung des in diese Nuten eingeführten und am Träger abgestützten Hebelwerkzeugs geschaffen.

In der Zeichnung ist der Erfindungsgegenstand beispielsweise dargestellt. Es zeigen
- Fig. 1: einen erfindungsgemäßen Abstreifer in einer zum Teil aufgerissenen Vorderansicht und
- Fig. 2: diesen Abstreifer in einem Schnitt nach der Linie II-II der Fig. 1 in einem größeren Maßstab.

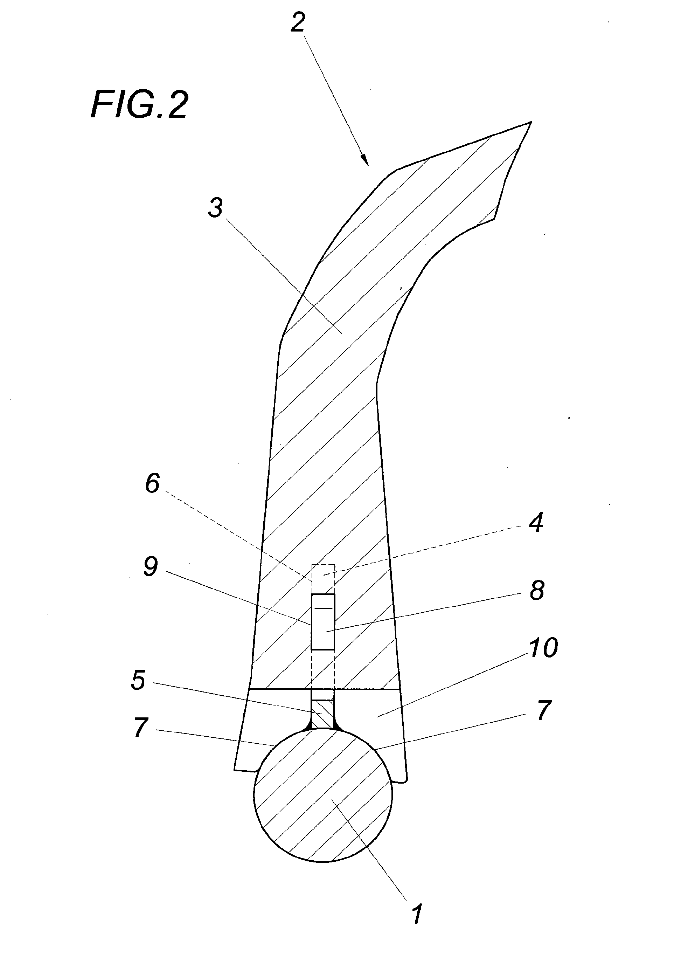

Der dargestellte Abstreifer umfasst einen Träger 1 und eine auf dem Träger 1 befestigte, biegeelastische Abstreifleiste 2, die sich aus einzelnen untereinander gleichen Leistenabschnitten 3 zusammensetzt. Zur Befestigung der Leistenabschnitte 3 auf dem Träger 1 weist dieser für jeden Leistenabschnitt 3 einen radial abstehenden, sich in Trägerlängsrichtung erstreckenden Befestigungsansatz 4 auf, wobei zur Konstruktionsvereinfachung die in Trägerlängsrichtung nebeneinandergereihten Befestigungsansätze 4 über einen gemeinsamen Steg 5 am Träger 1 angeschweißt sind. Die Leistenabschnitte 3 weisen Taschen 6 zur formschlüssigen Aufnahme der Steckansätze 4 auf und stützen sich zusätzlich über Stützflächen 7 beidseits der Befestigungsansätze 4 am Träger 1 ab, wie dies der Fig. 2 entnommen werden kann.

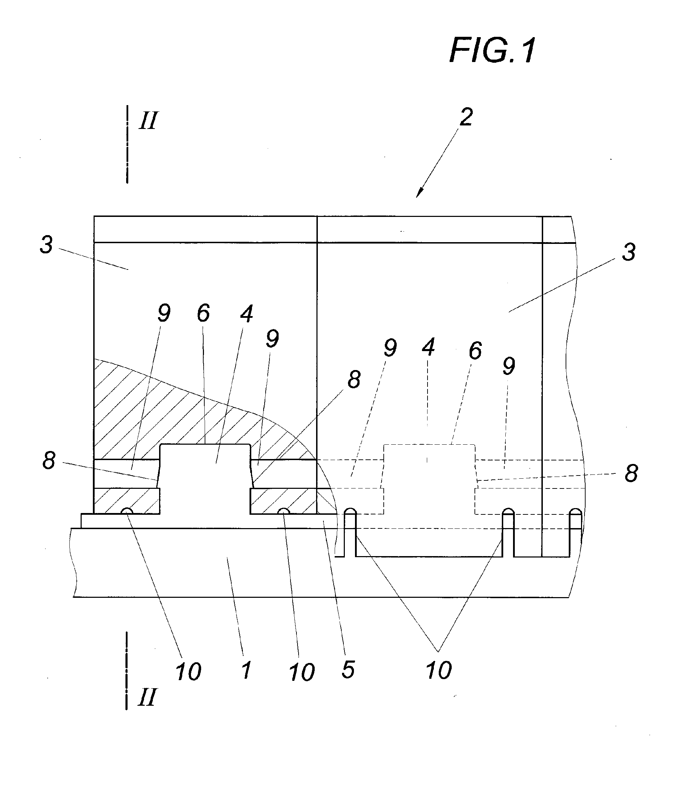

Zur Verriegelung der auf die Befestigungsansätze 4 aufgesteckten Leistenabschnitte 3 sind die Befestigungsansätze 4 auf ihren radialen Stirnseiten mit widerhakenartigen Rastkörpern 8 versehen, die in Rastaussparungen 9 auf der Breitseite der Taschen 6 eingreifen. Die widerhakenartigen Rastkörper 8 der Befestigungsansätze 4 weisen gemäß dem Ausführungsbeispiel nach der Fig. 1 eine Zahnform mit einer steilen Zahnbrust auf, die mit dem dem Träger 1 zugekehrten Rand der Rastaussparung 9 zusammenwirkt. Sobald der Rastkörper 8 mit seiner Zahnbrust diesen Rand der Rastaussparung 9 beim Aufstecken des Leistenabschnitts 3 auf den Befestigungsansatz 4 umgreift, ist ein unbeabsichtigtes Abziehen des Leistenabschnitts 3 vom Befestigungsansatz 4 nicht mehr möglich, weil eben der Leistenabschnitt 3 auf den einander gegenüberliegenden Breitseiten der Tasche 6 durch die Rastkörper 8 festgehalten wird.

Wie der Fig. 1 entnommen werden kann, sind die Rastaussparungen 9 für die Rastkörper 8 als in Trägerlängsrichtung verlaufende Durchtrittsöffnungen ausgebildet, was einfache Formwerkzeuge für die Herstellung der Leistenabschnitte 3 aus einer Kunststoffschmelze ermöglicht, was wohl nicht näher ausgeführt werden muss.

Um die auf die Befestigungsansätze 4 aufgesteckten Leistenabschnitte 3 der Abstreifleiste 2 wieder von den Befestigungsansätzen 4 lösen zu können, sind die Leistenabschnitte 3 mit quer zu den Befestigungsansätzen 4 und tangential zum Träger 5 verlaufenden Öffnungen 10 versehen, die einen Durchtritt über dem Träger 1 außerhalb der Befestigungsansätze 4 freigeben, wie dies insbesondere der Fig. 2 entnommen werden kann. Der durch die Öffnungen 10 gebildete Durchtritt über dem Träger 1 erlaubt den Einsatz eines Hebelwerkzeugs, das durch die Öffnung 10 eingeführt wird und sich am Träger 1 bzw. am Steg 5 der Befestigungsansätze 4 abstützen kann, sodass über das am Steg 5 bzw. am Träger 1 abgestützte Hebelwerkzeug der jeweilige Leistenabschnitt 3 vom Träger 1 unter einer Überwindung der Rastverbindung durch die Rastkörper 8 abgehoben und vom Befestigungsansatz 4 abgezogen werden kann.

Wie aus den Fig. 1 und 2 ersichtlich ist, werden die Öffnungen 10 durch Nuten gebildet, die in der am Träger 1 anliegenden Stützfläche 7 der Leistenabschnitte 3 ausgebildet sind. Diese Ausbildung der Öffnungen 10 erleichtert nicht nur die Herstellung dieser Öffnungen 10 bei der Formung der Leistenabschnitte 3, sondern schafft auch ausreichend Platz für den Einsatz des jeweils verwendeten Hebelwerkzeugs.

Die Erfindung ist selbstverständlich nicht auf das dargestellte Ausführungsbeispiel beschränkt. So könnte anstelle einer Reihe von Leistenabschnitten 3 die Abstreifleiste 2 lediglich einen einzigen Abschnitt aufweisen, der mit gleichem Vorteil auf einen Befestigungsansatz 4 aufgesteckt werden kann.

## Patentansprüche

1. Abstreifer für ein Förderband mit einem quer zum Förderband verlaufenden Träger (1) für eine biegeelastische Abstreifleiste (2) vorzugsweise aus in Trägerlängsrichtung nebeneinandergereihten Leistenabschnitten (3), die auf radial vom Träger (1) abstehende, sich in Trägerlängsrichtung erstreckende Befestigungsansätze (4) aufgesteckt und auf den Befestigungsansätzen (4) über in Rastaussparungen (9) eingreifende Rastkörper (8) gesichert sind, **dadurch gekennzeichnet, dass** die Leistenabschnitte (3) die Befestigungsansätze (4) formschlüssig aufnehmende Taschen (6) bilden, dass die Taschen (6) zumindest auf einer Breitseite die Rastaussparungen (9) für die auf den radialen Stirnseiten der Befestigungsansätze (4) vorgesehenen Rastkörper (8) aufweisen und dass die Leistenabschnitte (3) auf der Seite der Rastkörper (8) mit außerhalb der Befestigungsansätze (4) tangential zum Träger (1) und quer zu den Befestigungsansätzen (4) verlaufenden, einen Durchtritt über dem Träger (1) freigebenden Öffnungen (10) für den Einsatz eines Hebelwerkzeugs versehen sind.

2. Abstreifer nach Anspruch 1, **dadurch gekennzeichnet, dass** die Taschen (6) der Leistenabschnitte (3) auf beiden Breitseiten Rastaussparungen (9) für die Rastkörper (8) der Befestigungsansätze (4) aufweisen und dass die Rastaussparungen (9) als in Trägerlängsrichtung verlaufende Durchtrittsöffnungen ausgebildet sind.

3. Abstreifer nach Anspruch 1 oder 2, **dadurch gekennzeichnet, dass** die einen Durchtritt über dem Träger (1) freigebenden Öffnungen (10) der Leistenabschnitte (3) als Nuten in der am Träger (1) anliegenden Stützfläche (7) der Leistenabschnitte (3) ausgebildet sind.

## Claims

1. Scraper for a conveyor belt having a support (1), extending transversely with respect to the conveyor belt, for a flexurally elastic scraping strip (2) preferably made from strip portions (3) which are disposed next to each other in the longitudinal direction of the support and which are placed on attachment protrusions (4) - which protrude radially from the support (1) and extend in the longitudinal direction of the support - and are secured on the attachment protrusions (4) via latching bodies (8) engaging in latching apertures (9), **characterised in that** the strip portions (3) form pockets (6) receiving the attachment protrusions (4) in a form-fitting manner, that the pockets (6), at least on a broad side, have latching apertures (9) for the latching bodies (8) provided on the radial end faces of the attachment protrusions (4), and that the strip portions (3) are provided on the side of the latching body (8) with openings (10) for insertion of a levering tool, these openings extending outside the attachment protrusions (4) tangentially with respect to the support (1) and transversely with respect to the attachment protrusions (4) and exposing a passage via the support (1).

2. Scraper as claimed in claim 1, **characterised in that**, on both broad sides, the pockets (6) of the strip portions (3) have latching apertures (9) for the latching bodies (8) of the attachment protrusions (4) and that the latching apertures (9) are formed as through openings extending in the longitudinal direction of the support.

3. Scraper as claimed in claim 1 or 2, **characterised in that** the openings (10) of the strip portions (3), which expose a passage via the support (1), are formed as grooves in the support surface (7) of the strip portions (3), which lies against the support (1).

## Revendications

1. Racleur pour une bande convoyeuse avec un support (1) disposé transversalement à la bande convoyeuse, pour une baguette de raclage (2) élastique en flexion, de préférence constituée de sections de baguettes (3) alignées côte à côte dans le sens longitudinal du support, qui sont mises sur des embases de fixation (4) s'étendant dans le sens longitudinal du support, dépassant radialement du support (1) et sont sécurisées sur les embases de fixation (4) par des corps d'enclenchement (8) en prise dans des encoches d'enclenchement (9), **caractérisé en ce que** les sections de baguettes (3) forment des poches (6) logeant de façon solidaire les embases de fixation (4), **en ce que** les poches (6) présentent au moins sur un côté de largeur les encoches d'enclenchement (9) pour les corps d'enclenchement (8) prévus sur les faces frontales radiales des embases de fixation (4), et **en ce que** les sections de baguettes (3) sont munies sur le côté des corps d'enclenchement (8) d'ouvertures (10) dégageant un passage au-dessus du support (1), disposées transversalement aux embases de fixation (4), tangentiellement au support (1) en dehors des embases de fixation (4), pour utilisation d'un outil de levage.

2. Racleur selon la revendication 1, **caractérisé en ce que** les poches (6) des sections de baguettes (3) présentent sur les deux côtés de largeur des encoches d'enclenchement (9) pour les corps d'enclenchement (8) des embases de fixation (4) et **en ce que** les encoches d'enclenchement (9) sont conçues en tant qu'ouvertures de passage disposées dans le sens longitudinal du support.

3. Racleur selon la revendication 1 ou 2, **caractérisé en ce que** les ouvertures (10), dégageant un passage au-dessus du support (1), des sections de baguettes (3) sont conçues en tant que rainures dans la face d'appui (7), située adjacente au support (1), des sections de baguettes (3).
